(19)

Europäisches Patentamt
European Patent Office
Office européen des brevets

(11)  **EP 3 214 753 B1**

(12)  **EUROPEAN PATENT SPECIFICATION**

(45) Date of publication and mention
of the grant of the patent:
**25.09.2024   Bulletin 2024/39**

(21) Application number: **15855778.5**

(22) Date of filing: **25.08.2015**

(51) International Patent Classification (IPC):
*H02P 21/36* (2016.01)        *H02P 21/04* (2006.01)
*H02P 21/26* (2016.01)        *H02P 21/00* (2016.01)
*H02P 21/24* (2016.01)        *H02P 27/06* (2006.01)

(52) Cooperative Patent Classification (CPC):
**H02P 21/00; H02P 21/04; H02P 21/24;
H02P 21/26; H02P 21/36;** H02P 27/06

(86) International application number:
**PCT/JP2015/073797**

(87) International publication number:
**WO 2016/067721 (06.05.2016 Gazette 2016/18)**

(54) **POWER CONVERSION DEVICE AND METHOD FOR CONTROLLING POWER CONVERSION DEVICE**

STROMUMWANDLUNGSVORRICHTUNG UND VERFAHREN ZUR STEUERUNG DER STROMUMWANDLUNGSVORRICHTUNG

DISPOSITIF DE CONVERSION DE COURANT ET PROCÉDÉ DE COMMANDE DE DISPOSITIF DE CONVERSION DE COURANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **30.10.2014   JP 2014220958**

(43) Date of publication of application:
**06.09.2017   Bulletin 2017/36**

(73) Proprietor: **Hitachi Industrial Equipment Systems Co., Ltd.
Chiyoda-ku
Tokyo 101-0022 (JP)**

(72) Inventors:
• **TOBARI Kazuaki**
  **Tokyo 100-8280 (JP)**
• **IWAJI Yoshitaka**
  **Tokyo 100-8280 (JP)**
• **IBORI Satoshi**
  **Tokyo 101-0022 (JP)**
• **ONUMA Yusaku**
  **Tokyo 101-0022 (JP)**
• **TOMITA Hiroyuki**
  **Tokyo 101-0022 (JP)**
• **NAKAMURA Atsuhiko**
  **Tokyo 101-0022 (JP)**

(74) Representative: **Mewburn Ellis LLP
Aurora Building
Counterslip
Bristol BS1 6BX (GB)**

(56) References cited:
**EP-A1- 0 598 921        JP-A- 2000 312 496
JP-A- 2007 104 777       JP-A- 2010 022 096
JP-A- H0 880 098         JP-A- H1 198 897**

**Description**

Technical Field

The present invention relates to a power conversion device and a control method for a power conversion device.

Background Art

As a control method for an induction motor in regenerative operation, a method is described as in Patent Literature 1, in which a frequency or voltage is corrected so that a q-axis secondary magnetic flux has a negative value in regenerative operation for preventing torque from being decreased due to a change in the magnetic flux and hence the shortage of torque is reduced.

Citation List

Patent Literature

Patent Literature 1: Japanese Unexamined Patent Application Publication No. Hei 8-317698
Patent Literature 2: European Patent Application No. 0598921 A1 discloses a vector controller of induction motor.
Patent Literature 3: Japanese Patent Application No. 08-80098 A discloses a vector controller of motor.

JP 2010 022096 A describes a controller for an induction motor that carries out estimation calculation of the magnetic flux, electric current and speed of the motor using the current and voltage of the induction motor, and uses the speed estimation value calculated to variable speed-control the motor by vector control through a power converter.

Summary of Invention

Technical Problem

In the method of Patent Literature 1, the q-axis secondary magnetic flux is controlled to have a negative value in regenerative operation, and hence robustness is secured. However, the state of vector control is out of an ideal state (the q-axis secondary magnetic flux = 0). Thus, a problem arises in that in regenerative operation in a low-speed range, control performances to velocity command values are degraded.
An object of the present invention is to provide a power converter that can achieve highly accurate velocity control performances even in regenerative operation in a low-speed range.

Solution to Problem

A power conversion device according to the present invention is set out in claim 1. A method for controlling a power conversion device according to the present invention is set out in claim 8.

Advantageous Effects of Invention

According to the present invention, stable, highly accurate velocity control performances can be provided even in regenerative operation in a low-speed range. Problems, configurations, and effects other than ones described above will be apparent from the description of embodiments below.

Brief Description of Drawings

Fig. 1 is a block diagram of a power conversion device according to an embodiment of the present invention.
Fig. 2 is a diagram of load performances in the case of using a previously existing technique.
Fig. 3 is a flowchart of a velocity command adjustment operation unit according to an embodiment of the present invention.
Fig. 4 is a diagram of load performances according to an embodiment of the present invention.

Fig. 5 is a block diagram of a power converter according to an embodiment of the present invention.
Fig. 6 is a block diagram of a power converter according to an embodiment of the present invention.
Fig. 7 is a block diagram of a power converter according to an embodiment of the present invention.
Fig. 8 is a block diagram of an induction motor drive system to which an embodiment of the present invention is applied.
Fig. 9 is a block diagram of a power converter according to an embodiment of the present invention.

Description of Embodiments

In the following, embodiments of the present invention will be described with reference to the drawings. The present invention is not limited by these embodiments, the scope of protection is defined in the appended claims.
Moreover, in all the drawings for explaining the present invention, components having the same functions are designated the same reference numerals and signs, and overlapping description is sometimes omitted.

First Embodiment

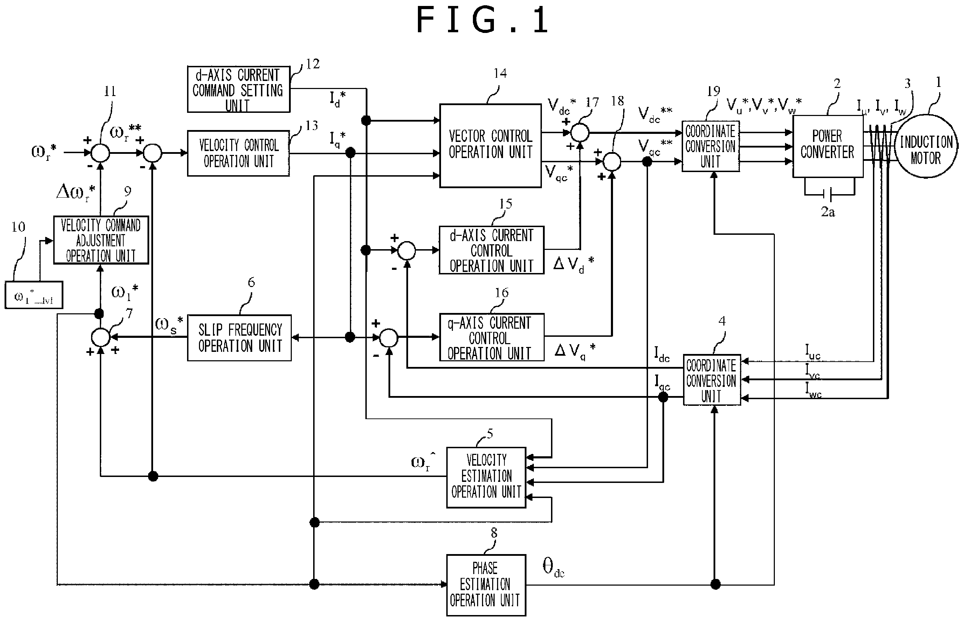

Fig. 1 is a block diagram of a power conversion device according to an embodiment.
An induction motor 1 generates torque by magnetic flux generated by the electric current of a magnetic flux axis (a d-axis) component and the electric current of a torque axis (a q-axis) component orthogonal to the magnetic flux axis.
A power converter 2 outputs voltage values proportional to output voltage command values $V_u^*$, $V_v^*$, and $V_w^*$ of three-phase alternating currents, and varies the output voltage values and the rotational frequency value of the induction motor 1.
A direct current power supply 2a supplies a direct current voltage to the power converter 2.
A current detector 3 outputs detected values $I_{uc}$, $I_{vc}$, and $I_{wc}$ of three-phase alternating currents $I_u$, $I_v$, and $I_w$ of the induction motor 1. The current detector 3 may be configured in which the current detector 3 detects the line currents of the U-phase and the W-phase, for example, which are two phases of the three-phase induction motor 1, and the line current of the V-phase is found as $I_v = - (I_u + I_w)$ from the alternating current conditions ($I_u + I_v + I_w = 0$).
A coordinate conversion unit 4 (a current vector component detecting unit) outputs detected current values $I_{dc}$ and $I_{qc}$ of the d-axis (the magnetic flux component) and the q-axis (the torque component) based on the detected values $I_{uc}$, $I_{vc}$, and $I_{wc}$ of the three-phase alternating currents $I_u$, $I_v$, and $I_w$ and a phase estimation value $\theta_{dc}$.
The velocity estimation operation unit 5 outputs a velocity estimation value $\omega_r^{\wedge}$ of the induction motor 1 based on a d-axis current command value $I_d^*$, a q-axis voltage command value $V_{qc}^{**}$, the q-axis detected current value $I_{qc}$, an output frequency value $\omega_1^*$, and electric constants ($R_1$, $R_2'$, $M$, $L_2$, and $\phi_{2d}^*$) of the induction motor 1.
A slip frequency operation unit 6 outputs a slip frequency value $\omega_s^*$ of the induction motor 1 based on the d-axis current command value $I_d^*$, a q-axis current command value $I_q^*$, and a secondary electric constant $T_2$ of the induction motor 1.
In a constant torque range, the d-axis current command value $I_d^*$ is typically constantly controlled, and the magnetic flux $\Phi$ is constant as well. Thus, the slip frequency operation unit 6 operates and outputs the slip frequency value $\omega_s^*$ of the induction motor 1 based on the q-axis current command value $I_q^*$. In a constant output range, the d-axis current command value $I_d^*$ is variably controlled with respect to the number of revolutions, and the magnetic flux $\Phi$ is variable as well. Thus, the slip frequency operation unit 6 operates and outputs the slip frequency value $\omega_s^*$ of the induction motor 1 based on the d-axis current command value $I_d^*$ and the q-axis current command value $I_q^*$.
An adding unit 7 (an output frequency operation unit) outputs the output frequency value $\omega_1^*$, which is the additional value of the velocity estimation value $\omega_r^{\wedge}$ and the slip frequency command value $\omega_s^*$.
A phase estimation operation unit 8 integrates the output frequency value $\omega_1^*$, and outputs the phase estimation value $\theta_{dc}$.
A velocity command adjustment operation unit 9 outputs an adjustment value $\Delta\omega_r^*$ of the velocity command based on the output frequency value $\omega_1^*$ and $\omega_1^*{}_{\_lvl}$, which is a velocity command adjustment start level 10 for a velocity command value $\omega_r^*$.
A subtracting unit 11 outputs a new velocity command value $\omega_r^{**}$, which is a subtraction value between a velocity command value $\omega_r^*$, which is supplied from a higher unit, and the adjustment value $\Delta\omega_r^*$ for the velocity command.
A d-axis current command setting unit 12 outputs the d-axis current command value $I_d^*$ of a positive polarity.
A velocity control operation unit 13 outputs the q-axis current command value $I_q^*$ based on a deviation (($\omega_r^{**} - \omega_r^{\wedge}$)) between the new velocity command value $\omega_r^{**}$ and the velocity estimation value $\omega_r^{\wedge}$.
A vector control operation unit 14 outputs a d-axis voltage command value $V_{dc}^*$ and a q-axis voltage command value $V_{qc}^*$ based on the electric constants ($R_1$, $L_\sigma$, $M$, and $L_2$) of the induction motor 1, the current command values $I_d^*$ and $I_q^*$, and the output frequency value $\omega_1^*$.
A d-axis current control operation unit 15 (a current control operation unit) controls a d-axis current vector component value according to the d-axis current command value $I_d{}^*$, and outputs a d-axis voltage correction value $\Delta V_d{}^*$ based on a deviation ($I_d{}^*$ - $I_{dc}$) between the d-axis current command value $I_d{}^*$ and the detected current value $I_{dc}$.

A q-axis current control operation unit 16 (a current control operation unit) controls a q-axis current vector component value according to the q-axis current command value $I_q{}^*$, and outputs a q-axis voltage correction value $\Delta V_q{}^*$ based on a deviation ($I_q{}^*$ - $I_{qc}$) between the q-axis current command value $I_q{}^*$ and the detected current value $I_{qc}$.

An adding unit 17 outputs $V_{dc}{}^{**}$, which is an additional value of the d-axis voltage command value $V_{dc}{}^*$ and the d-axis voltage correction value $\Delta V_d{}^*$.

An adding unit 18 outputs $V_{qc}{}^{**}$, which is an additional value of the q-axis voltage command value $V_{qc}{}^*$ and the q-axis voltage correction value $\Delta V_q{}^*$.

A coordinate conversion unit 19 outputs the three-phase alternating current voltage command values $V_u{}^*$, $V_v{}^*$, and $V_w{}^*$ based on the voltage command values $V_{dc}{}^{**}$ and $V_{qc}{}^{**}$ and the phase estimation value $\theta_{dc}$.

First, the basic operation of a velocity sensorless control method in the case without using the velocity command adjustment operation unit 9, which is a feature of the embodiment, will be described.

The d-axis current command setting unit 12 outputs the current command value $I_d{}^*$, which is necessary to generate the d-axis secondary magnetic flux $\phi_{2d}$ of the induction motor 1. In the velocity control operation unit 13, the q-axis current command value $I_q{}^*$ is operated according to an arithmetic operation expressed in Expression 1 so that the velocity estimation value $\omega_r{}^\wedge$ is matched with the velocity command value $\omega_r{}^*$. In Expression 1, $Kp_{ASR}$ is the proportional gain of velocity control, and $Ki_{ASR}$ is the integral gain of velocity control.

[Expression 1]

$$I_q{}^* = \left(Kp_{ASR} + \frac{Ki_{ASR}}{s}\right)(\omega r^* - \omega r^\wedge)$$

... (Expression 1)

In the vector control operation unit 14, the voltage command values $V_{dc}{}^*$ and $V_{qc}{}^*$ expressed in Expression 2 are operated using the d-axis current command value $I_d{}^*$, the q-axis current command value $I_q{}^*$, the electric constants ($R_1$, $L_\sigma$, M, and $L_2$) of the induction motor 1, the d-axis secondary magnetic flux command value $\phi_{2d}{}^*$, and the output frequency value $\omega_1{}^*$. In Expression 2, $T_{ACR}$ is a current control delay time constant, $R_1$ is a primary resistance value, $L_\sigma$ is a leakage inductance value, M is a mutual inductance value, and $L_2$ is a secondary inductance value.

[Expression 2]

$$\begin{bmatrix} V_{dc}{}^* = R_1 \cdot I_d{}^* - \omega_1{}^* \cdot L_\sigma \cdot \dfrac{1}{1 + T_{ACR} \cdot s} I_q{}^* \\[4mm] V_{qc}{}^* = R_1 \cdot I_q{}^* + \omega_1{}^* \cdot L_\sigma \cdot \dfrac{1}{1 + T_{ACR} \cdot s} I_d{}^* + \omega_1{}^* \cdot \dfrac{M}{L_2} \cdot \phi_{2d}{}^* \end{bmatrix}$$

... (Expression 2)

To the d-axis current control operation unit 15, the d-axis current command value $I_d{}^*$ and the detected current value $I_{dc}$ are inputted. To the q-axis current control operation unit 16, the q-axis current command value $I_q{}^*$ and the detected current value $I_{qc}$ are inputted.

Here, according to Expression 3, the arithmetic operation of (proportion + integral) is performed on the current command values $I_d{}^*$ and $I_q{}^*$ so that the detected current values $I_{dc}$ and $I_{qc}$ of the components are followed, and the d-axis and the q-axis voltage correction values $\Delta V_d{}^*$ and $\Delta V_q{}^*$ are outputted. In Expression 3, $K_{pdACR}$ is the proportional gain of d-axis electric current control, $K_{idACR}$ is the integral gain of d-axis electric current control, $K_{pqACR}$ is the proportional gain of q-axis electric current control, and $K_{iqACR}$ is the integral gain of q-axis electric current control.

[Expression 3]

$$\left[\begin{array}{c} \Delta V_d^{*} = (K_{pdACR} + \dfrac{K_{idACR}}{s})(I_d^{*} - I_{dc}) \\ \Delta V_q^{*} = (K_{pqACR} + \dfrac{K_{iqACR}}{s})(I_q^{*} - I_{qc}) \end{array}\right] \quad \ldots \text{(Expression 3)}$$

In the adding units 17 and 18, the voltage command values $V_{dc}^{**}$ and $V_{qc}^{**}$ expressed in Expression 4 are operated to control the output of the power converter 2.

[Expression 4]

$$\left[\begin{array}{c} V_{dc}^{**} = V_{dc}^{*} + \Delta V_d^{*} \\ V_{qc}^{**} = V_{qc}^{*} + \Delta V_q^{*} \end{array}\right] \quad \ldots \text{(Expression 4)}$$

In the velocity estimation operation unit 5, the velocity of the induction motor 1 is estimated according to Expression 5. In this velocity estimation arithmetic operation, the q-axis induced voltage value is estimated using a disturbance observer, and divided by a magnetic flux coefficient, and hence $\omega_r{}^{\wedge}$ is extracted. In Expression 5, $R_2'$ is the primary reduced value of a secondary resistance value, and $T_{obs}$ is a velocity estimation delay time constant set to the disturbance observer.

[Expression 5]

$$\omega_r{}^{\wedge} = \frac{1}{1 + T_{obs} \cdot s}\left[\frac{V_{qc}^{**} - \omega_1^{*} \cdot L\sigma \cdot \dfrac{1}{1 + T_{ACR} \cdot s} \cdot I_d^{*} - \left[(R_1 + R_2') + L\sigma \cdot s\right]I_{qc}}{\dfrac{M}{L_2}\phi_{2d}}\right] \quad \ldots$$

(Expression 5)

In the slip frequency operation unit 6, the slip frequency command value $\omega_s^{*}$ of the induction motor 1 is operated according to Expression 6. In Expression 6, $T_2$ is a secondary time constant value.

[Expression 6]

$$\omega_s^{*} = \frac{1}{T_2 \cdot I_d^{*}} \cdot \frac{1}{1 + T_{ACR} \cdot s} I_q^{*} \quad \ldots \text{(Expression 6)}$$

In the adding unit 7, the output frequency value $\omega_1^{*}$ expressed in Expression 7 is operated using the velocity estimation value $\omega_r{}^{\wedge}$ and the slip frequency command value $\omega_s^{*}$.

[Expression 7]

$$\omega_1^{*} = \omega_r{}^{\wedge} + \omega_s^{*} \quad \ldots \text{(Expression 7)}$$

In the phase estimation operation unit 8, the magnetic flux axis position $\theta_{dc}$ of the induction motor 1 is estimated according to Expression 8.

[Expression 8]

$$\theta_{dc} = \frac{1}{s} \cdot \omega_1^*$$

... (Expression 8)

Based on the estimated position $\theta_{dc}$ used for control, a sensorless control arithmetic operation is executed. The description above is the basic operation.

In the following, control performances will be described in the case of using the velocity command adjustment operation unit 9, which is a feature of the embodiment.

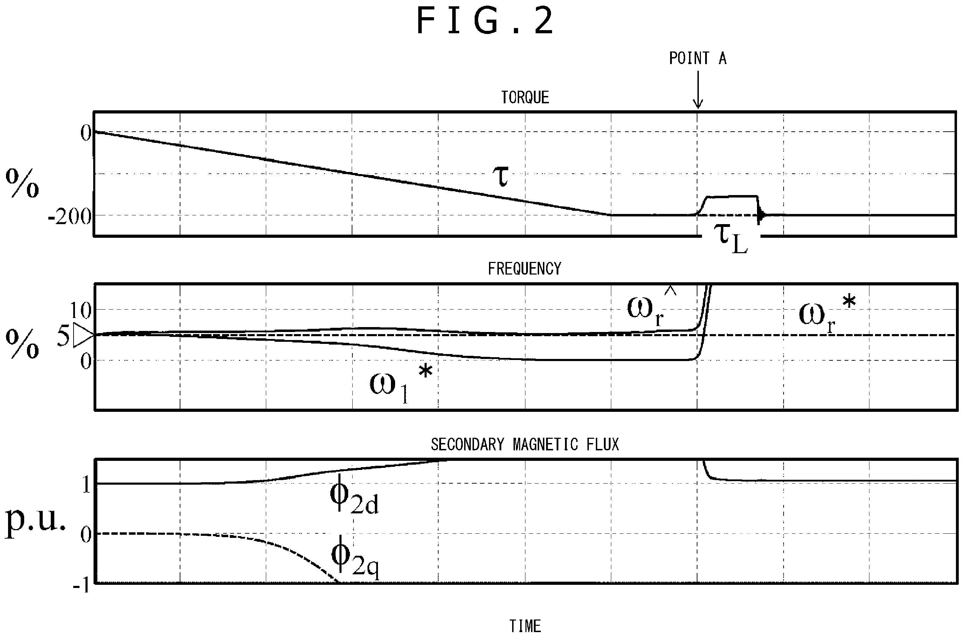

Fig. 2 is load performances in the case of using Patent Literature 1. In the state in which the velocity of the induction motor 1 is controlled at 5% of a rated speed, ramp regenerative torque $\tau_L$ is given up to -200%. From Fig. 2, a q-axis secondary magnetic flux $\phi_{2q}$ in the inside of the induction motor 1 is generated on the negative side, and the d-axis the secondary magnetic flux $\phi_{2d}$ is increased on the positive side. The output frequency value $\omega_1^*$ is finally zero. After point A shown in Fig. 2, the output frequency value $\omega_1^*$ is diverged in the positive direction. In other words, in regenerative operation in the low-speed range, there is a problem in that velocity control performances are degraded.

When the velocity command adjustment operation unit 9, which is a feature of the embodiment, is used, these velocity control performances can be improved. In the following, this will be described.

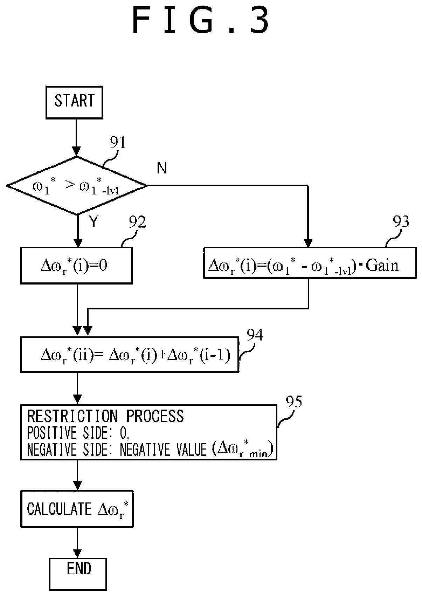

Fig. 3 is a flowchart of a velocity command adjustment arithmetic operation method according to the embodiment.

In a determination process 91, the output frequency value $\omega_1^*$ is compared with a constant value ($\omega_1^*{}_{\_lvl}$). In the case where $\omega_1^*$ is smaller than $\omega_1^*{}_{\_lvl}$, in an arithmetic operation process 93, a deviation ($\omega_1^* - \omega_1^*{}_{\_lvl}$)is multiplied by a gain Gain, and $\Delta\omega_r^*(i)$ is operated according to Expression 9.

[Expression 9]

$$\Delta\omega_r^*(i) = (\omega_1^* - \omega_1^*{}_{\_lvl}) \cdot \text{Gain}$$

... (Expression 9)

On the other hand, in the case where $\omega_1^*$ is greater than $\omega_1^*{}_{\_lvl}$, $\Delta\omega_r^*(i) = 0$ in the arithmetic operation process 92.

In an arithmetic operation process 94, $\Delta\omega_r^*(ii)$ is operated according to Expression 10 using $\Delta\omega_r^*(i)$ and an operated value $\Delta\omega_r^*(i-1)$, which is the previous operated value.

[Expression 10]

$$\Delta\omega_r^*(ii) = \Delta\omega_r^*(i) + \Delta\omega_r^*(i-1)$$

... (Expression 10)

In a subsequent arithmetic operation process 95, $\Delta\omega_r^*(ii)$ is restricted according to Expression 11 using a positive-side value that is zero and a negative-side value that is a negative constant value $\Delta\omega_r^*{}_{min}$. For $\Delta\omega_r^*{}_{min}$, for example, a value only has to be set, which corresponds to a slip frequency value generated at the maximum torque.

[Expression 11]

$$\omega_r^*{}_{\_min} \leq \Delta\omega_r^*(ii) \leq 0$$

... (Expression 11)

This operated value $\Delta\omega_r^*(ii)$ is outputted as the adjustment amount $\Delta\omega_r^*$ of the velocity command value.

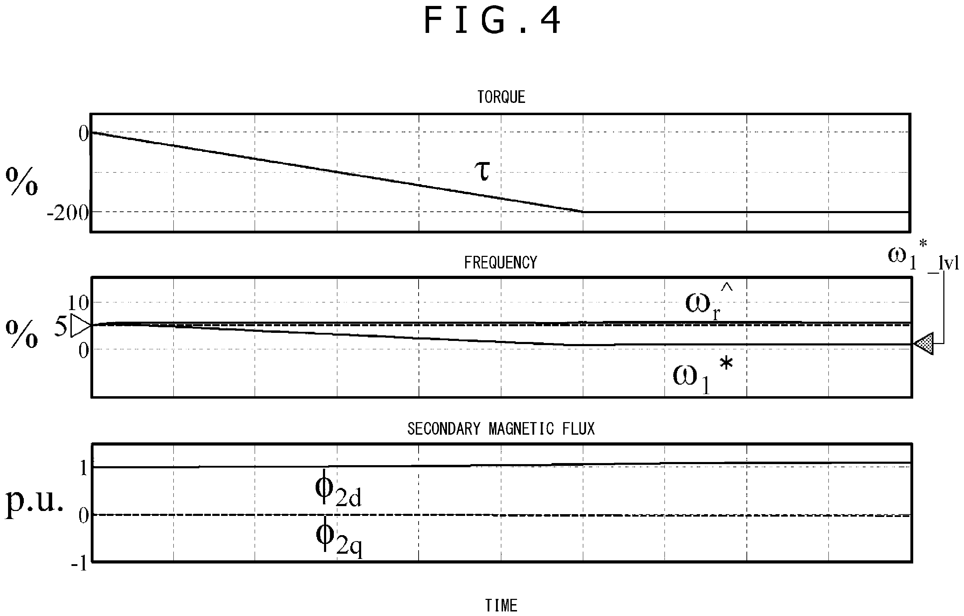

The load performances according to the embodiment are shown in Fig. 4, to which the load conditions used in Fig. 2 are set. From Figs. 2 and 4, with the comparison of the load characteristics disclosed in Figs. 2 and 4, in the case of control using the velocity command adjustment operation unit 9, which is a feature of the embodiment, stability is noticeable in all the generated torque, frequency, and secondary magnetic flux of the induction motor, clearly showing the effects of the velocity command adjustment operation unit 9.

In the embodiment, $\Delta\omega_r^*$ is operated so that the output frequency value $\omega_1^*$ is matched with the adjustment level $\omega_1^*{}_{\_lvl}$ of the velocity command value. Thus, it is revealed that $\omega_1^*$ is stationarily matched with $\omega_1^*{}_{\_lvl}$.

To the velocity command value $\omega_r^*$ that is 5% before adjusted, the new velocity command value $\omega_r^{**}$ is $(5 + \omega_1^*{}_{\_lvl})\%$. The induction motor 1 is driven under velocity control so that the velocity estimation value $\omega_r^\wedge$ follows the new velocity command value $\omega_r^{**}$. More highly accurate velocity control can be implemented, compared with Fig. 2, which shows the previously existing performances. Here, the velocity corresponds to $\omega_1^*{}_{\_lvl} = 1\%$. This value is involved in a setting error $\Delta R_1$ of the primary resistance value of the induction motor 1 and error voltage values in performing dead time compensation for switching devices configuring the power converter.

When the set values are matched with the actual values, the velocity corresponding to $\omega_1^*{}_{\_lvl} = 1\%$ is sufficient. However, for example, $\omega_1^*{}_{\_lvl}$ is set corresponding to the velocity in a range of 1 to 2%, or 2% or less in advance taking into account of the setting errors, more stable driving can be implemented. The value of $\omega_1^*{}_{\_lvl}$ is one example, and any values can be used.

As described above, in the case where the output frequency value is the constant value or less, the velocity command value of the induction motor is controlled so that the output frequency value is matched with the constant value. Thus, the stability of the generated torque, frequency, and secondary magnetic flux of the induction motor can be improved. Here, in the case where the output frequency value is the constant value or less, the velocity command value of the induction motor may be controlled so that the output frequency value is the constant value or more. Control is conducted so that the output frequency value is matched with the constant value. Thus, a possibility of exceeding the number of revolutions, which is desired to be constant, can be reduced, even in the case where torque is changed.

Here, switching devices configuring the power converter may be silicon (Si) semiconductor devices or may be wide-band gap semiconductor devices, such as silicon carbide (SiC) and gallium nitride (GaN).

Second Embodiment

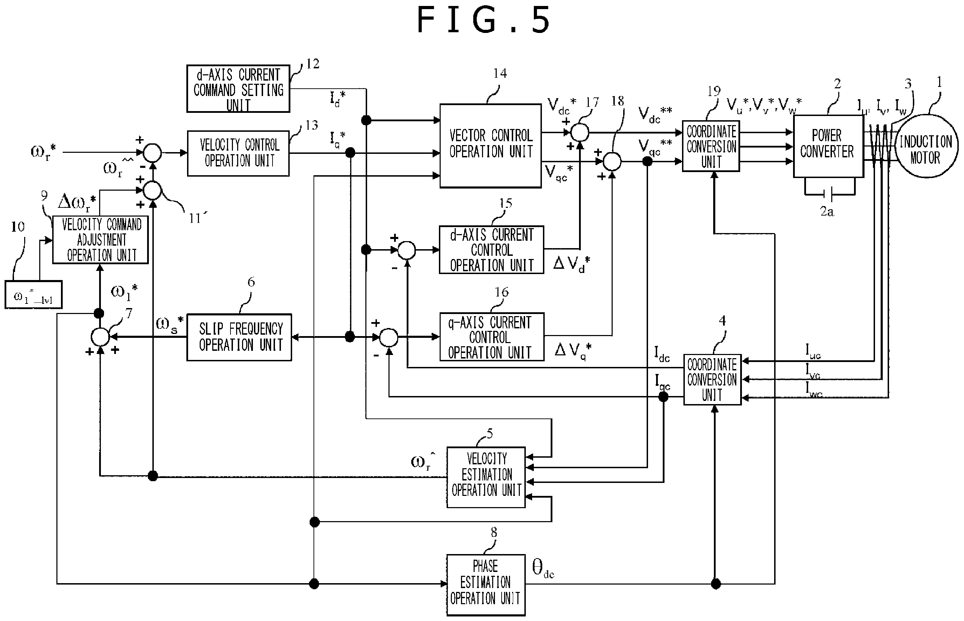

Fig. 5 is a block diagram of a power converter according to a second embodiment. In the first embodiment, the velocity command value $\omega_r^*$ is adjusted based on the output value of the velocity command adjustment operation unit 9. However, the embodiment is a method that adjusts the velocity estimation value $\omega_r^\wedge$. In Fig. 5, components 1 to 10, 12 to 19, and 2a are the same as the components in Fig. 1.

An adding unit 11' outputs a new velocity estimation value $\omega_r^{\wedge\wedge}$, which is an additional value of the velocity estimation value $\omega_r^\wedge$ and the velocity command adjustment value $\Delta\omega_r^*$, which are operated. In a velocity control operation unit 13, the q-axis current command value $I_q^*$ is operated so that the velocity estimation value $\omega_r^{\wedge\wedge}$ is matched with the velocity command value $\omega_r^*$.

In other words, the velocity estimation value is adjusted instead of the velocity command value. This also allows highly accurate velocity control to be implemented similarly to the first embodiment, obtaining similar effects.

Third Embodiment

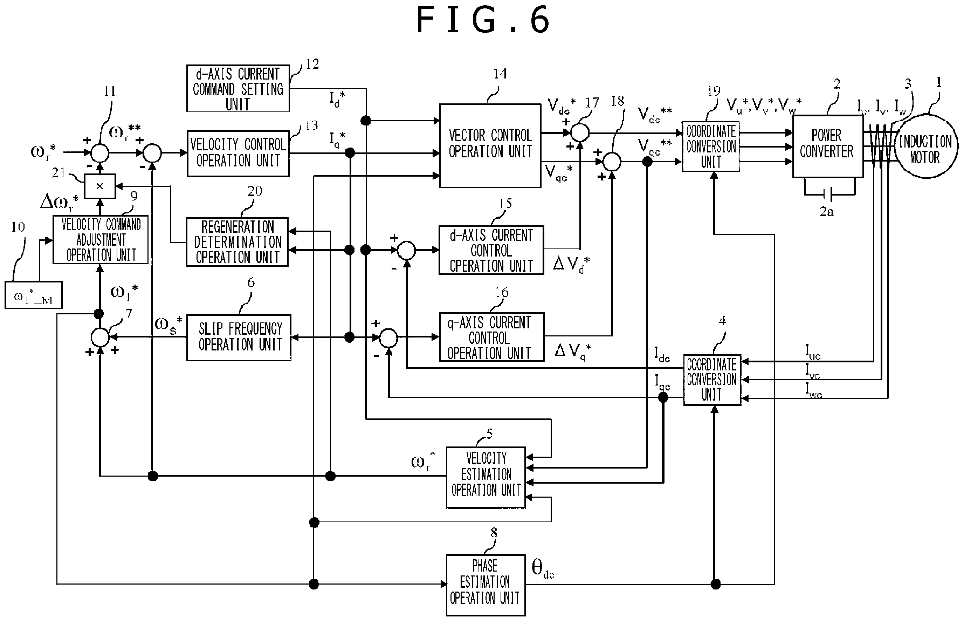

Fig. 6 is a block diagram of a power converter according to a third embodiment. In the first embodiment, the velocity command value $\omega_r^*$ is adjusted based on the output value of the velocity command adjustment operation unit 9 in powering/regenerative operation. However, the embodiment is a method that adjusts the velocity command value $\omega_r^*$ only in regenerative operation. In Fig. 6, components 1 to 19, and 2a are the same as the components in Fig. 1.

A regeneration determination operation unit 20 receives the q-axis current command value $I_q^*$ and the velocity estimation value $\omega_r^\wedge$. When $I_q^*$ and $\omega_r^\wedge$ have the same signs, the regeneration determination operation unit 20 determines that operation is powering operation, and outputs "0", whereas when $I_q^*$ and $\omega_r^\wedge$ have different signs, the regeneration determination operation unit 20 determines that operation is regenerative operation, and outputs "1".

A method may be possible in which after the q-axis detected current value $I_{qc}$ and the velocity estimation value $\omega_r^\wedge$ are inputted to the regeneration determination operation unit 20, when $I_{qc}$ and $\omega_r^\wedge$ have the same signs, the regeneration determination operation unit 20 determines that operation is powering operation, and outputs "0", whereas when $I_{qc}$ and $\omega_r^\wedge$ have different signs, the regeneration determination operation unit 20 determines that operation is regenerative operation, and outputs "1".

A multiplying unit 21 receives the adjustment value $\Delta\omega_r^*$ of the velocity command and "0" or "1", which is the output signal of the regeneration determination operation unit 20. In other words, in powering operation, the velocity command value $\omega_r^*$ is not adjusted. The velocity command value $\omega_r^*$ is adjusted only in regenerative operation.

The velocity command value is adjusted only in regenerative operation. This also allows highly accurate velocity control to be implemented.

Fourth Embodiment

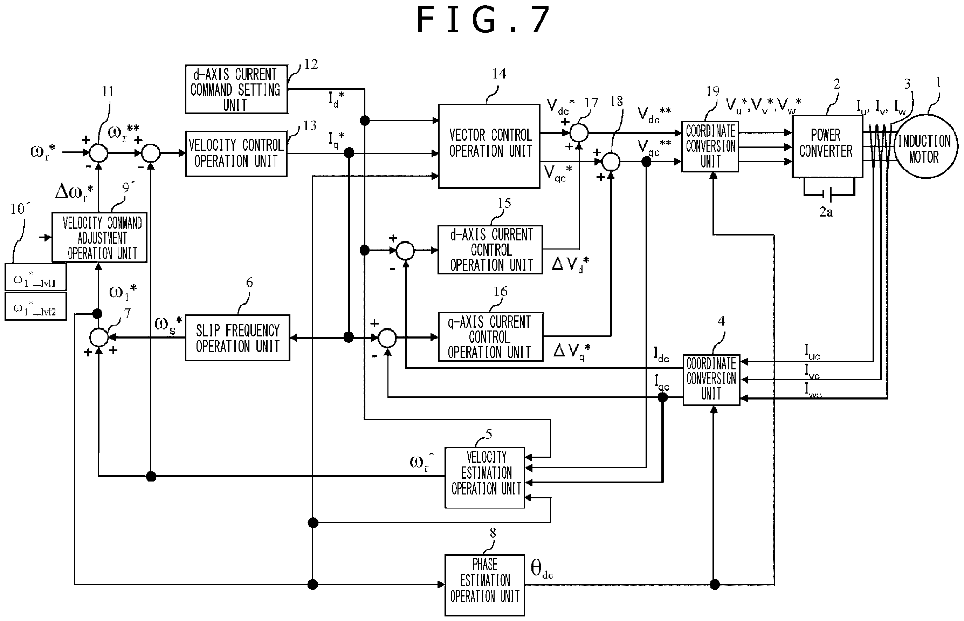

Fig. 7 is a block diagram of a power converter according to a fourth embodiment. In the first embodiment, the velocity command adjustment operation unit 9 outputs the velocity command adjustment value $\Delta\omega_r{}^*$ based on the output frequency value $\omega_1{}^*$ and the adjustment start level $\omega_1{}^*{}_{\_lvl}$ of the velocity command value $\omega_r{}^*$. However, in the embodiment, the adjustment start level of the velocity command value $\omega_r{}^*$ is set to two levels ($\omega_1{}^*{}_{\_lvl1}$ and $\omega_1{}^*{}_{\_lvl2}$). For example, the value of 1% of the rated speed is set to $\omega_1{}^*{}_{\_lvl1}$, and the value of 2% of the rated speed is set to $\omega_1{}^*{}_{\_lv12}$. In Fig. 7, components 1 to 8, 11 to 19, and 2a are the same as the components in Fig. 1.

10' denotes the adjustment start level of the velocity command value $\omega_r{}^*$, to which two levels ($\omega_1{}^*{}_{\_lvl1}$ and $\omega_1{}^*{}_{\_lvl2}$) are set.

In a velocity command adjustment operation unit 9', first, the adjustment start level of the velocity command value $\omega_r{}^*$ is set to the first level ($\omega_1{}^*{}_{\_lvl1}$) for actual operation. As a result, in the case where torque is short or an overcurrent trip occurs, the setting of the adjustment start level of the velocity command value $\omega_r{}^*$ is automatically changed to the second level ($\omega_1{}^*{}_{\_lvl2}$) at the subsequent arithmetic operation timing.

With this configuration, the adjustment start levels of the optimum velocity command value $\omega_r{}^*$ can be set. In the embodiment, the number of levels is two levels. However, a plurality of levels may be prepared. In this manner, a plurality of adjustment start levels is set to the velocity command value $\omega_r{}^*$, and hence stable, highly accurate velocity control can be implemented in any states of load torque (the level or slope of torque).

Fifth Embodiment

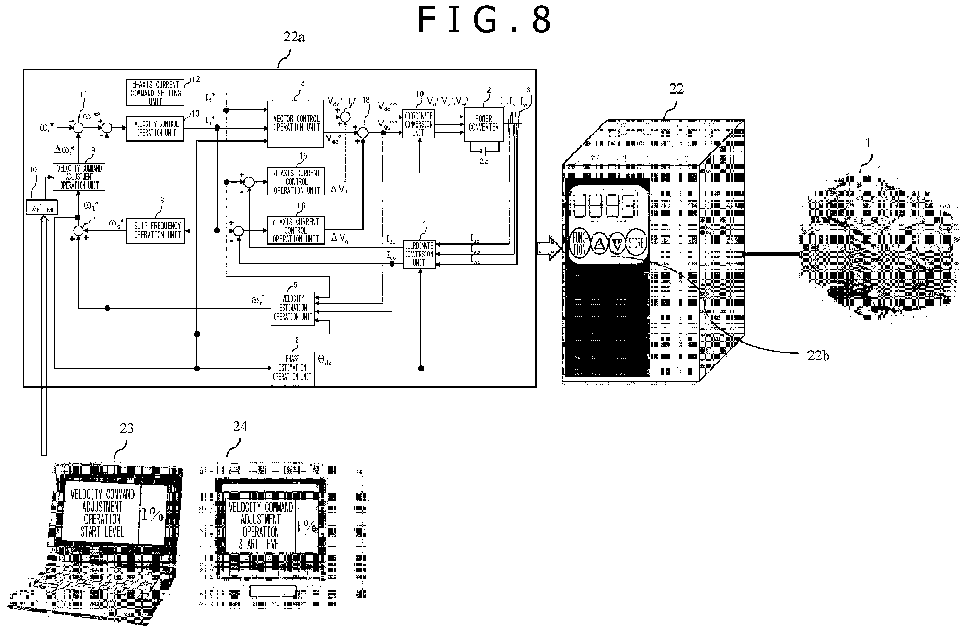

Fig. 8 is a block diagram of a power converter according to a fifth embodiment. The embodiment is applied to an induction motor drive system. In Fig. 8, components 1 to 19 and 2a are the same as the components in Fig. 1.

An induction motor 1, which is the component in Fig. 1, is driven by a power conversion device 22. On the power conversion device 22, the components 1 to 19 and 2a in Fig. 1 are mounted as software and hardware.

A configuration may be possible in which the value of the velocity command adjustment start level ($\omega_1{}^*{}_{\_lvl}$)can be set through higher devices, such as a digital operator 22b of the power conversion device 22, a personal computer 23, and a tablet 24.

When the embodiment is applied to the induction motor drive system, highly accurate velocity control performances can be implemented. The embodiment is disclosed using the first embodiment. However, the embodiment may be disclosed using the second to the fourth embodiments.

Sixth Embodiment

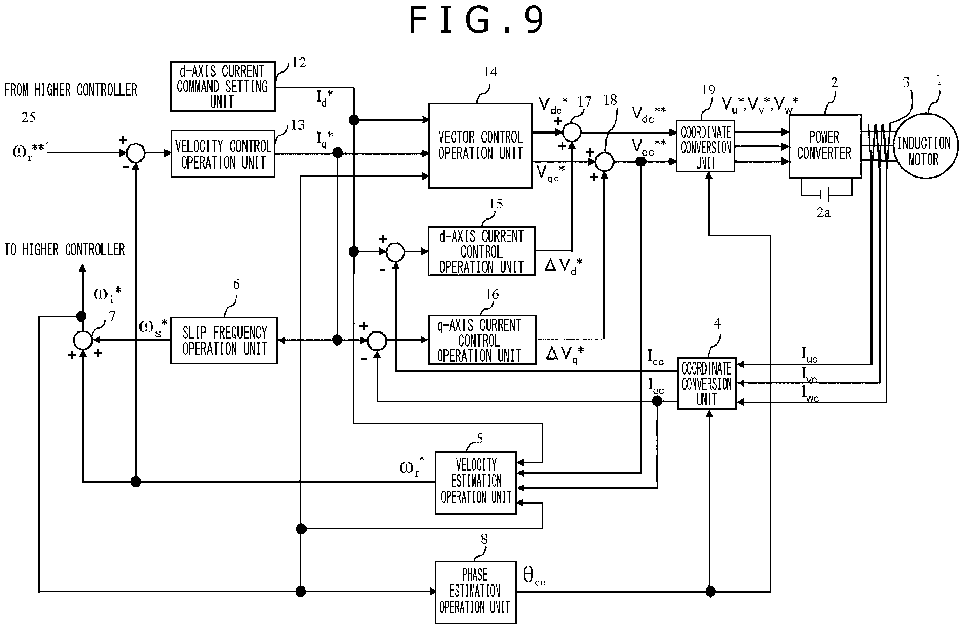

Fig. 9 is a block diagram of a power converter according to a sixth embodiment. The embodiment is applied to a higher controller that gives velocity command values to a power converter. In Fig. 9, components 1 to 8, 12 to 19, and 2a are the same as the components in Fig. 1.

A velocity command value ($\omega_r{}^{**'}$ is a new velocity command value operated on the higher controller side. A configuration may be possible in which the output frequency value $\omega_1{}^*$ operated inside the power conversion device is returned to the higher controller, a velocity command value adjustment arithmetic operation is performed on the higher controller side, and a new velocity command value $\omega_r{}^{**'}$ is given to the power conversion device. Higher devices in this case are a PLC (Programmable Logic Controller) and a program operating function in the inside of the power conversion device, for example.

The configurations of the embodiment can also implement highly accurate velocity control similarly to the first embodiment.

In the first to the sixth embodiments so far, the arithmetic operation expressed in Expression 2 is performed, in which the voltage correction values $\Delta V_d{}^*$ and $\Delta V_q{}^*$ are generated based on the current command values $I_d{}^*$ and $I_q{}^*$ and the detected current values $I_{dc}$ and $I_{qc}$ and then the voltage correction values are added to the voltage command values for vector control. This is also applicable to a control method below.

(1) A vector control method, in which based on the current command values $I_d{}^*$ and $I_q{}^*$ and the detected current values $I_{dc}$ and $I_{qc}$, intermediate current command values $I_d{}^{**}$ and $I_q{}^{**}$ expressed in Expression 12 are generated, which are used for a vector control arithmetic operation, and voltage command values $V_{dc}{}^{***}$ and $V_{qc}{}^{***}$ are operated according to Expression 13 using the current command values, the output frequency value $\omega_1{}^*$, and the electric constants of the induction motor 1. In Expression 12, $K_{pdACR1}$ is the proportional gain of electric current control, $K_{idACR1}$ is the integral gain of electric current control, $K_{pqACR1}$ is the proportional gain of electric current control, and $K_{iqACR1}$ is the integral gain of electric current control.

[Expression 12]

$$\begin{bmatrix} I_d^{**} = (K_{pdACR1} + \dfrac{K_{idACR1}}{s})(I_d^{*} - I_{dc}) \\ I_q^{**} = (K_{pqACR1} + \dfrac{K_{iqACR1}}{s})(I_q^{*} - I_{qc}) \end{bmatrix}$$

... (Expression 12)

[Expression 13]

$$\begin{bmatrix} V_{dc}^{***} \\ V_{qc}^{***} \end{bmatrix} = \begin{bmatrix} R_1 & -\omega_1^{*} \cdot L_\sigma \\ \omega_1^{*} \cdot L_\sigma & R_1 \end{bmatrix} \cdot \begin{bmatrix} I_d^{**} \\ I_q^{**} \end{bmatrix} + \begin{bmatrix} 0 \\ \omega_1^{*} \cdot \dfrac{M}{L_2} \cdot \phi_{2d}^{*} \end{bmatrix}$$

... (Expression 13)

(2) A control method, in which an output frequency command value $\omega_1^{*}$ expressed in Expression 14 and voltage command values $V_{dc}^{****}$ and $V_{qc}^{****}$ expressed in Expression 15 are operated using the d-axis current command $I_d^{*}$, a primary delay signal $I_{qctd}$ of the q-axis detected current value $I_{qc}$, the velocity command value $\omega_r^{*}$, and the electric constants of the induction motor 1.

[Expression 14]

$$\omega_1^{**} = \omega_r^{*} + \dfrac{1}{T_2 \cdot I_d^{*}} \cdot I_{qc}$$

... (Expression 14)

[Expression 15]

$$\begin{bmatrix} V_{dc}^{****} \\ V_{qc}^{****} \end{bmatrix} = \begin{bmatrix} R_1 & -\omega_1^{**} \cdot L_\sigma \\ \omega_1^{**} \cdot L_\sigma & R_1 \end{bmatrix} \cdot \begin{bmatrix} I_d^{*} \\ I_{qctd} \end{bmatrix} + \begin{bmatrix} 0 \\ \omega_1^{**} \cdot \dfrac{M}{L_2} \cdot \phi_{2d}^{*} \end{bmatrix}$$

... (Expression 15)

In the first to the sixth embodiments so far, in the velocity estimation operation unit 5, the velocity estimation value is operated according to Expression 5. However, a method may be possible, in which electric current control and velocity estimation are both used in q-axis current control. As expressed in Expression 16, a velocity estimation value $\omega_r^{\wedge\wedge\wedge}$ is operated. In Expression 16, $K_{pqACR2}$ is the proportional gain of electric current control, and $K_{iqACR2}$ is the integral gain of electric current control.

[Expression 16]

$$\omega_r^{\wedge\wedge\wedge} = (K_{pqACR2} + \dfrac{K_{iqACR2}}{s})(I_q^{*} - I_{qc})$$

... (Expression 16)

Reference Signs List

| 1 | induction motor |
|---|---|
| 2 | power converter |
| 2a | direct current power supply |
| 3 | current detector |
| 4 | coordinate conversion unit |
| 5 | velocity estimation operation unit |
| 6 | slip frequency operation unit |
| 7 | adding unit |
| 8 | phase estimation operation unit |
| 9, 9' | velocity command adjustment operation unit |
| 10, 10' | velocity command adjustment start level |
| 11, 11' | subtracting unit |
| 12 | d-axis current command setting unit |
| 13 | velocity control operation unit |
| 14 | vector control operation unit |
| 15 | d-axis current control operation unit |
| 16 | q-axis current control operation unit |
| 17 | adding unit |
| 18 | adding unit |
| 19 | coordinate conversion unit |
| 20 | regeneration estimation operation unit |
| 21 | multiplying unit |
| 22 | power conversion device |
| 22a | internal components of the power conversion device |
| 23 | personal computer |
| 24 | tablet |
| $I_d{}^*$ | d-axis current command value |
| $I_q{}^*$ | q-axis current command value |
| $\omega_r$ | velocity of the induction motor 1 |
| $\omega_r{}^\wedge$, $\omega_r{}^{\wedge\wedge\wedge}$ | velocity estimation value |
| $\omega_r{}^{\wedge\wedge}$ | new velocity estimation value |
| $\omega_s$ | slip of the induction motor 1 |
| $\omega_s{}^*$ | slip frequency command value |
| $\omega_1{}^*$ | output frequency value of the induction motor 1 |
| $\theta_{dc}$ | phase estimation value |
| $\omega_r{}^*$ | velocity command value |
| $\omega_r{}^{**}$ | new velocity command value |
| $\Delta\omega_r{}^*$ | adjustment amount of the velocity command value |
| $V_{dc}{}^*$ | d-axis voltage command reference value |
| $V_{qc}{}^*$ | q-axis voltage command reference value |
| $V_{dd}{}^{**}$, $V_{dc}{}^{***}$, $V_{dc}{}^{****}$ | d-axis voltage command value |
| $V_{qc}{}^{**}$, $V_{qc}{}^{***}$, $V_{qc}{}^{****}$ | q-axis voltage command value |

**Claims**

1.  A power conversion device (22) comprising:

    a velocity estimation operation unit (5) configured to output a velocity estimation value of an induction motor (1);
    an output frequency operation unit (7) configured to output an output frequency value that is an additional value of the velocity estimation value and a slip frequency value of the induction motor; and
    a velocity command adjustment operation unit (9, 9') configured to control a velocity command value or the velocity estimation value of the induction motor (1) according to an adjustment value so that the output frequency value is a constant value or more when the output frequency value is the constant value or less;

**characterized in that** the adjustment value is operated according to the deviation between the output frequency value and a velocity command adjustment start level value (10), which is the constant value, as multiplied by a gain, in case the output frequency value is smaller than the velocity command adjustment start level value (10), and

that the adjustment value is zero in case the output frequency value is greater than the velocity command adjustment start level value (10).

2. The power conversion device (22) according to claim 1, comprising:

a current vector component detecting unit (4) that outputs a detected current value of a magnetic flux component and a detected current value of a torque component based on a detected current value of the induction motor (1);

a slip frequency operation unit (6) that outputs a slip frequency command value of the induction motor (1) based on a current command value of the magnetic flux component and a current command value of the torque component;

a phase estimation operation unit (8) that integrates the output frequency value and outputs a phase estimation value;

a velocity control operation unit (13) that outputs a current command value of the torque component based on the velocity command value;

a vector control operation unit (14) that outputs a voltage command value of the magnetic flux component and a voltage command value of the torque component based on the output frequency value, an electric constant of the induction motor (1), the current command value of the magnetic flux component, and the current command value of the torque component;

a current control operation unit (15, 16) that outputs a voltage correction value of the magnetic flux component and a voltage correction value of the torque component based on the current command value of the magnetic flux component, a detected current value of the magnetic flux component, the current command value of the torque component, and a detected current value of the torque component;

an adding unit (17, 18) that outputs an additional value of the voltage command value of the magnetic flux component and the voltage correction value of the magnetic flux component as well as an additional value of the voltage command value of the torque component and the voltage correction value of the torque component; and

a coordinate conversion unit (19) that outputs an output voltage command value of a three-phase alternating current based on the voltage command value of the magnetic flux component, the voltage command value of the torque component, and the phase estimation value.

3. The power conversion device (22) according to any one of claims 1 to 2, further comprising a regeneration determination operation unit (20) that determines powering operation or regenerative operation of the induction motor, wherein the velocity command adjustment operation unit (9, 9') controls the velocity command value or the velocity estimation value only in regenerative operation of the induction motor.

4. The power conversion device (22) according to any one of claims 1 to 3, wherein the velocity command adjustment start level value is 2% or less of rated rotation speed of the induction motor.

5. The power conversion device (22) according to claim 4, wherein for the velocity command adjustment start level value, a first constant value, and a second constant value are set.

6. The power conversion device (22) according to claim 4 or 5, wherein the velocity command adjustment start level value is set through a digital operator (22b), a personal computer (23), or a tablet device (24) in the power conversion device (22).

7. The power conversion device (22) according to any one of claims 1 to 6, wherein the output frequency value is transmitted to a higher device (25); and based on the output frequency value and the velocity command adjustment start level value, the higher device (25) transmits an adjustment value of a velocity command to the power conversion device (22).

8. A control method for a power conversion device, the device including:

a velocity estimation operation unit that outputs a velocity estimation value of an induction motor;

an output frequency operation unit that outputs an output frequency value that is an additional value of the velocity estimation value and a slip frequency value of the induction motor; and

a velocity command adjustment operation unit that controls a velocity command value or the velocity estimation value of the induction motor according to an adjustment value so that the output frequency value is a constant value or more when the output frequency value is the constant value or less;

**characterized in that** the adjustment value is operated according to the deviation between the output frequency value and velocity command adjustment start level value (10), which is the constant value, as multiplied by a gain, in case the output frequency value is smaller than the velocity command adjustment start level value (10), and

that the adjustment value is zero in case the output frequency value is greater than the velocity command adjustment start level value (10).


**Patentansprüche**

1. Leistungswandlervorrichtung (22), umfassend:

   eine Drehzahlschätzungsbetriebseinheit (5), die konfiguriert ist, um einen Drehzahlschätzwert eines Induktionsmotors (1) auszugeben;

   eine Ausgangsfrequenzbetriebseinheit (7), die konfiguriert ist, um einen Ausgangsfrequenzwert, der ein zusätzlicher Wert des Drehzahlschätzwerts ist, und einen Schlupffrequenzwert des Induktionsmotors auszugeben; und

   eine Drehzahlbefehlsanpassungsbetriebseinheit (9, 9'), die konfiguriert ist, um einen Drehzahlbefehlswert oder den Drehzahlschätzwert des Induktionsmotors (1) gemäß einem Anpassungswert so zu steuern, dass der Ausgangsfrequenzwert ein konstanter Wert oder mehr ist, wenn der Ausgangsfrequenzwert der konstante Wert oder weniger ist;

   **dadurch gekennzeichnet, dass** der Anpassungswert entsprechend der Abweichung zwischen dem Ausgangsfrequenzwert und einem Drehzahlbefehlsanpassungsausgangspegelwert (10), der der konstante Wert multipliziert mit einer Steigerung ist, betrieben wird, falls der Ausgangsfrequenzwert geringer ist als der Drehzahlbefehlsanpassungsausgangspegelwert (10), und

   dass der Anpassungswert null ist, falls der Ausgangsfrequenzwert größer ist als der Drehzahlbefehlsanpassungsausgangspegelwert (10).

2. Leistungswandlervorrichtung (22) nach Anspruch 1, umfassend:

   eine Stromvektorkomponentendetektionseinheit (4), die einen detektierten Stromwert einer Magnetflusskomponente und einen detektierten Stromwert einer Drehmomentkomponente beruhend auf einem detektierten Stromwert des Induktionsmotors (1) ausgibt;

   eine Schlupffrequenzbetriebseinheit (6), die einen Schlupffrequenzbefehlswert des Induktionsmotors (1) beruhend auf einem Strombefehlswert der Magnetflusskomponente und einem Strombefehlswert der Drehmomentkomponente ausgibt;

   einen Phasenschätzungsbetriebseinheit (8), die den Ausgangsfrequenzwert integriert und einen Phasenschätzwert ausgibt;

   eine Drehzahlsteuerungsbetriebseinheit (13), die einen Strombefehlswert der Drehmomentkomponente beruhend auf dem Drehzahlbefehlswert ausgibt;

   eine Vektorsteuerungsbetriebseinheit (14), die einen Spannungsbefehlswert der Magnetflusskomponente und einen Spannungsbefehlswert der Drehmomentkomponente beruhend auf dem Ausgangsfrequenzwert, einer elektrischen Konstante des Induktionsmotors (1), dem Strombefehlswert der Magnetflusskomponente und dem Strombefehlswert der Drehmomentkomponente ausgibt;

   eine Stromsteuerungsbetriebseinheit (15, 16), die einen Spannungskorrekturwert der Magnetflusskomponente und einen Spannungskorrekturwert der Drehmomentkomponente beruhend auf dem Strombefehlswert der Magnetflusskomponente, einem detektierten Stromwert der Magnetflusskomponente, dem Strombefehlswert der Drehmomentkomponente und einem detektierten Stromwert der Drehmomentkomponente ausgibt;

   eine Zusetzeinheit (17, 18), die einen zusätzlichen Wert des Spannungsbefehlswerts der Magnetflusskomponente und des Spannungskorrekturwerts der Magnetflusskomponente sowie einen zusätzlichen Wert des Spannungsbefehlswerts der Drehmomentkomponente und des Spannungskorrekturwerts der Drehmomentkomponente ausgibt; und

   eine Koordinatenwandlungseinheit (19), die einen Ausgangsspannungsbefehlswert eines dreiphasigen Wechselstroms beruhend auf dem Spannungsbefehlswert der Magnetflusskomponente, dem Spannungsbefehlswert der Drehmomentkomponente und dem Phasenschätzwert ausgibt.

3. Leistungswandlervorrichtung (22) nach einem der Ansprüche 1 bis 2, ferner umfassend eine Regenerationsbestimmungsbetriebseinheit (20), die einen Versorgungsbetrieb oder einen regenerativen Betrieb des Induktionsmotors bestimmt,
wobei die Drehzahlbefehlsanpassungsbetriebseinheit (9, 9') den Drehzahlbefehlswert oder den Drehzahlschätzwert nur im regenerativen Betrieb des Induktionsmotors steuert.

4. Leistungswandlervorrichtung (22) nach einem der Ansprüche 1 bis 3,
wobei der Drehzahlbefehlsanpassungsausgangspegelwert 2 % oder weniger der Soll-Drehzahl des Induktionsmotors entspricht.

5. Leistungswandlervorrichtung (22) nach Anspruch 4,
wobei für den Drehzahlbefehlsanpassungsausgangspegelwert ein erster konstanter Wert und ein zweiter konstanter Wert eingestellt sind.

6. Leistungswandlervorrichtung (22) nach Anspruch 4 oder 5,
wobei der Drehzahlbefehlsanpassungsausgangspegelwert über einen digitalen Betreiber (22b), einen PC (23) oder eine Tabletvorrichtung (24) in der Leistungswandlervorrichtung eingestellt wird.

7. Leistungswandlervorrichtung (22) nach einem der Ansprüche 1 bis 6,
wobei der Ausgangsfrequenzwert an eine höhere Vorrichtung (25) gesendet wird; und die höhere Vorrichtung (25) beruhend auf dem Ausgangsfrequenzwert und dem Drehzahlbefehlsanpassungsausgangspegelwert einen Anpassungswert eines Drehzahlbefehls an die Leistungswandlervorrichtung (22) sendet.

8. Steuerverfahren für eine Leistungswandlervorrichtung, wobei die Vorrichtung Folgendes umfasst:

eine Drehzahlschätzungsbetriebseinheit, die einen Drehzahlschätzwert eines Induktionsmotors ausgibt;
eine Ausgangsfrequenzbetriebseinheit, die einen Ausgangsfrequenzwert, der ein zusätzlicher Wert des Drehzahlschätzwerts ist, und einen Schlupffrequenzwert des Induktionsmotors ausgibt; und
einen Drehzahlbefehlsanpassungsbetriebseinheit, die einen Drehzahlbefehlswert oder den Drehzahlschätzwert des Induktionsmotors gemäß einem Anpassungswert so steuert, dass der Ausgangsfrequenzwert ein konstanter Wert oder mehr ist, wenn der Ausgangsfrequenzwert der konstante Wert oder weniger ist;
**dadurch gekennzeichnet, dass** der Anpassungswert entsprechend der Abweichung zwischen dem Ausgangsfrequenzwert und einem Drehzahlbefehlsanpassungsausgangspegelwert (10), der der konstante Wert multipliziert mit einer Steigerung ist, betrieben wird, falls der Ausgangsfrequenzwert geringer ist als der Drehzahlbefehlsanpassungsausgangspegelwert (10), und
dass der Anpassungswert null ist, falls der Ausgangsfrequenzwert größer ist als der Drehzahlbefehlsanpassungsausgangspegelwert (10).

## Revendications

1. Dispositif de conversion de puissance (22), comprenant :

une unité d'opération d'estimation de vitesse (5) configurée pour délivrer en sortie une valeur d'estimation de vitesse d'un moteur à induction (1) ;
une unité d'opération de fréquence de sortie (7) configurée pour délivrer en sortie une valeur de fréquence de sortie qui est une valeur additionnelle constituée de la valeur d'estimation de vitesse et d'une valeur de fréquence de glissement du moteur à induction ; et
une unité d'opération d'ajustement d'instruction de vitesse (9, 9') configurée pour commander une valeur d'instruction de vitesse ou la valeur d'estimation de vitesse du moteur à induction (1) en fonction d'une valeur d'ajustement de sorte que la valeur de fréquence de sortie est égale à une valeur constante ou plus lorsque la valeur de fréquence de sortie est égale à la valeur constante ou moins ;
**caractérisé en ce que** la valeur d'ajustement est activée en fonction de l'écart entre la valeur de fréquence de sortie et une valeur de niveau de début d'ajustement d'instruction de vitesse (10), qui est la valeur constante, multipliée par un gain, dans le cas où la valeur de fréquence de sortie est inférieure à la valeur de niveau de début d'ajustement d'instruction de vitesse (10), et
**en ce que** la valeur d'ajustement est nulle dans le cas où la valeur de fréquence de sortie est supérieure à la valeur de niveau de début d'ajustement d'instruction de vitesse (10) .

2. Dispositif de conversion de puissance (22) selon la revendication 1, comprenant :

une unité de détection de composante de vecteur de courant (4) qui délivre en sortie une valeur de courant détectée d'une composante de flux magnétique et une valeur de courant détectée d'une composante de couple sur la base d'une valeur de courant détectée du moteur à induction (1) ;
une unité d'opération de fréquence de glissement (6) qui délivre en sortie une valeur d'instruction de fréquence de glissement du moteur à induction (1) sur la base d'une valeur d'instruction de courant de la composante de flux magnétique et d'une valeur d'instruction de courant de la composante de couple ;
une unité d'opération d'estimation de phase (8) qui intègre la valeur de fréquence de sortie et délivre en sortie une valeur d'estimation de phase ;
une unité d'opération de commande de vitesse (13) qui délivre en sortie une valeur d'instruction de courant de la composante de couple sur la base de la valeur d'instruction de vitesse ;
une unité d'opération de commande vectorielle (14) qui délivre en sortie une valeur d'instruction de tension de la composante de flux magnétique et une valeur d'instruction de tension de la composante de couple sur la base de la valeur de fréquence de sortie, d'une constante électrique du moteur à induction (1), de la valeur d'instruction de courant de la composante de flux magnétique, et de la valeur d'instruction de courant de la composante de couple ;
une unité d'opération de commande de courant (15, 16) qui délivre en sortie une valeur de correction de tension de la composante de flux magnétique et une valeur de correction de tension de la composante de couple sur la base de la valeur d'instruction de courant de la composante de flux magnétique, d'une valeur de courant détectée de la composante de flux magnétique, de la valeur d'instruction de courant de la composante de couple, et d'une valeur de courant détectée de la composante de couple ;
une unité d'addition (17, 18) qui délivre en sortie une valeur additionnelle constituée de la valeur d'instruction de tension de la composante de flux magnétique et de la valeur de correction de tension de la composante de flux magnétique ainsi qu'une valeur additionnelle constituée de la valeur d'instruction de tension de la composante de couple et de la valeur de correction de tension de la composante de couple ; et
une unité de conversion de coordonnées (19) qui délivre en sortie une valeur d'instruction de tension de sortie d'un courant alternatif triphasé sur la base de la valeur d'instruction de tension de la composante de flux magnétique, de la valeur d'instruction de tension de la composante de couple, et de la valeur d'estimation de phase.

3. Dispositif de conversion de puissance (22) selon l'une quelconque des revendications 1 à 2, comprenant en outre une unité d'opération de détermination de régénération (20) qui détermine une opération d'alimentation en énergie ou une opération de régénération du moteur à induction,
dans lequel l'unité d'opération d'ajustement d'instruction de vitesse (9, 9') commande la valeur d'instruction de vitesse ou la valeur d'estimation de vitesse uniquement lors d'une opération de régénération du moteur à induction.

4. Dispositif de conversion de puissance (22) selon l'une quelconque des revendications 1 à 3,
dans lequel la valeur de niveau de début d'ajustement d'instruction de vitesse est égale à 2 % ou moins de la vitesse de rotation nominale du moteur à induction.

5. Dispositif de conversion de puissance (22) selon la revendication 4,
dans lequel, pour la valeur de niveau de début d'ajustement d'instruction de vitesse, une première valeur constante et une seconde valeur constante sont établies.

6. Dispositif de conversion de puissance (22) selon la revendication 4 ou 5,
dans lequel la valeur de niveau de début d'ajustement d'instruction de vitesse est établie par l'intermédiaire d'un opérateur numérique (22b), d'un ordinateur personnel (23), ou d'une tablette (24) dans le dispositif de conversion de puissance (22).

7. Dispositif de conversion de puissance (22) selon l'une quelconque des revendications 1 à 6,
dans lequel la valeur de fréquence de sortie est transmise à un dispositif supérieur (25) ; et sur la base de la valeur de fréquence de sortie et de la valeur de niveau de début d'ajustement d'instruction de vitesse, le dispositif supérieur (25) transmet une valeur d'ajustement d'une instruction de vitesse au dispositif de conversion de puissance (22).

8. Procédé de commande pour un dispositif de conversion de puissance, le dispositif comportant :

une unité d'opération d'estimation de vitesse qui délivre en sortie une valeur d'estimation de vitesse d'un moteur à induction ;

une unité d'opération de fréquence de sortie qui délivre en sortie une valeur de fréquence de sortie qui est une valeur additionnelle constituée de la valeur d'estimation de vitesse et d'une valeur de fréquence de glissement du moteur à induction ; et

une unité d'opération d'ajustement d'instruction de vitesse qui commande une valeur d'instruction de vitesse ou la valeur d'estimation de vitesse du moteur à induction en fonction d'une valeur d'ajustement de sorte que la valeur de fréquence de sortie est égale à une valeur constante ou plus lorsque la valeur de fréquence de sortie est égale à la valeur constante ou moins ;

**caractérisé en ce que** la valeur d'ajustement est activée en fonction de l'écart entre la valeur de fréquence de sortie et la valeur de niveau de début d'ajustement d'instruction de vitesse (10), qui est la valeur constante, multipliée par un gain, dans le cas où la valeur de fréquence de sortie est inférieure à la valeur de niveau de début d'ajustement d'instruction de vitesse (10), et

**en ce que** la valeur d'ajustement est nulle dans le cas où la valeur de fréquence de sortie est supérieure à la valeur de niveau de début d'ajustement d'instruction de vitesse (10) .

# FIG.1

EP 3 214 753 B1

F I G . 2

# FIG.3

```
              ┌─────────┐
              │  START  │
              └─────────┘
                   │
                   ▼            91
              ╱─────────╲
            ╱             ╲        N
           ⟨  ω₁* > ω₁*₋ₗᵥₗ  ⟩──────────────────────────┐
            ╲             ╱                              │
              ╲─────────╱                                │
                   │ Y        92                         │      93
                   ▼                                     ▼
           ┌───────────────┐              ┌────────────────────────────┐
           │  Δωᵣ*(i)=0    │              │ Δωᵣ*(i)=(ω₁* - ω₁*₋ₗᵥₗ)·Gain │
           └───────────────┘              └────────────────────────────┘
                   │                                     │
                   │◄────────────────────────────────────┘
                   ▼                               94
        ┌──────────────────────────────────┐
        │  Δωᵣ*(ii)= Δωᵣ*(i)+Δωᵣ*(i-1)      │
        └──────────────────────────────────┘
                   │
                   ▼                                95
        ┌──────────────────────────────────────────┐
        │ RESTRICTION PROCESS                       │
        │ POSITIVE SIDE: 0,                         │
        │ NEGATIVE SIDE: NEGATIVE VALUE (Δωᵣ*min)   │
        └──────────────────────────────────────────┘
                   │
                   ▼
        ┌──────────────────────┐
        │  CALCULATE Δωᵣ*       │
        └──────────────────────┘
                   │
                   ▼
              ┌─────────┐
              │   END   │
              └─────────┘
```

Decision (91): $\omega_1^* > \omega_{1\text{-lvl}}^*$

Block (92): $\Delta\omega_r^*(i)=0$

Block (93): $\Delta\omega_r^*(i)=(\omega_1^* - \omega_{1\text{-lvl}}^*)\cdot \text{Gain}$

Block (94): $\Delta\omega_r^*(ii)= \Delta\omega_r^*(i)+\Delta\omega_r^*(i-1)$

Block (95): RESTRICTION PROCESS POSITIVE SIDE: 0, NEGATIVE SIDE: NEGATIVE VALUE $(\Delta\omega_{r\text{ min}}^*)$

CALCULATE $\Delta\omega_r^*$

# F I G . 4

TORQUE

FREQUENCY

$\omega_1{}^*{}_{\_lvl}$

SECONDARY MAGNETIC FLUX

TIME

# FIG. 5

EP 3 214 753 B1

# FIG.6

INDUCTION MOTOR 1

UNIT 3

$I_u, I_v, I_w$

POWER CONVERTER 2

2a

$V_u^*, V_v^*, V_w^*$

COORDINATE CONVERSION UNIT 19

$I_{uc}, I_{vc}, I_{wc}$

COORDINATE CONVERSION UNIT 4

$V_{dc}^{**}$  $V_{qc}^{**}$  18

$I_{dc}$  $I_{cc}$

$V_{dc}^*$ 17  $V_{qc}^*$

VECTOR CONTROL OPERATION UNIT 14

$\Delta V_d^*$

d-AXIS CURRENT CONTROL OPERATION UNIT 15

$\Delta V_q^*$

q-AXIS CURRENT CONTROL OPERATION UNIT 16

VELOCITY ESTIMATION OPERATION UNIT 5

$\hat{\omega}_r$

$\theta_{dc}$

PHASE ESTIMATION OPERATION UNIT 8

$I_d^*$

d-AXIS CURRENT COMMAND SETTING UNIT 12

$I_q^*$

VELOCITY CONTROL OPERATION UNIT 13

REGENERATION DETERMINATION OPERATION UNIT 20

SLIP FREQUENCY OPERATION UNIT 6

$\omega_s^*$

$\omega_r^{**}$

11

$\omega_1^*$ 7

$\omega_r^*$

$\Delta\omega_r^*$ 21

VELOCITY COMMAND ADJUSTMENT OPERATION UNIT 9

$\omega_{1\_M}^*$ 10

# FIG.7

FIG. 8

# FIG.9

EP 3 214 753 B1

**EP 3 214 753 B1**

**REFERENCES CITED IN THE DESCRIPTION**

**Patent documents cited in the description**

- JP HEI8317698 A
- EP 0598921 A1
- JP 8080098 A
- JP 2010022096 A